# EUROPEAN PATENT SPECIFICATION

(11) **EP 3 517 322 B1**
(45) Date of publication and mention of the grant of the patent: **14.10.2020**
(21) Application number: 19152124.4
(22) Date of filing: 16.01.2019
(51) Int. Cl.: B60C 11/03

(54) **TIRE**
REIFEN
PNEUMATIQUE

(30) Priority: 29.01.2018 JP 2018012309
(43) Date of publication of application: 31.07.2019
(73) Proprietor: Sumitomo Rubber Industries, Ltd., Kobe-shi, Hyogo-ken 651-0072 (JP)
(72) Inventor: MAEDA, Yoshiyuki, Kobe-shi, Hyogo 651-0072 (JP); NAKANO, Keita, Kobe-shi, Hyogo 651-0072 (JP)
(74) Representative: Manitz Finsterwald Patent- und Rechtsanwaltspartnerschaft mbB

(56) References cited:
- EP-A1- 1 992 503
- EP-A1- 2 316 665
- EP-A2- 0 943 464
- EP-A2- 3 075 571
- DE-U1- 9 005 029
- JP-A- 2002 316 516
- US-B1- 6 595 255

## Description

### BACKGROUND OF THE INVENTION

### Field of the Invention

The present invention relates to tires for vehicles, specifically, tires suitable for traveling on rough terrain such as a time trial competition on a dirt road (so called "dirt trial" in Japan), a rally, and the like.

### Description of the Background Art

Japanese Laid-Open Patent Publication No. 2016-196237 discloses a tire suitable for traveling on rough terrain. A tread portion of the tire includes: a plurality of first inclined grooves inclined relative to the tire circumferential direction and extending at least from the tire equator to an outer tread end; a plurality of second inclined grooves extending at least from the tire equator toward the outer tread end so as to be inclined in a direction opposite to the first inclined grooves; and a plurality of blocks demarcated by the first inclined grooves and the second inclined grooves. Similar but different tires are disclosed in EP 0 943 464 A2, EP 1 992 503 A1, EP 2 316 665 A1, US 6 595 255 B1, DE 90 05 029 U1, and JP 2002 316516 A, respectively.

### SUMMARY OF THE INVENTION

With the tire of Japanese Laid-Open Patent Publication No. 2016-196237, excellent cornering grip and traction performance can be exhibited during traveling on rough terrain, but these performance characteristics are not stably exhibited on a travel road that includes corners having various radiuses of curvature.

The present inventors have conducted various researches, and have found that the tire of Japanese Laid-Open Patent Publication No. 2016-196237 does not allow a scratching effect (hereinafter, referred to as "edge effect") to be effectively exhibited by edges of the grooves or the blocks. Specifically, it has been found that the edge effect is not effectively exhibited for the following reason: the edge effect is most effectively exhibited when the longitudinal directions of the edges are orthogonal to the tire running direction (synonymous with the vehicle running direction); however, in the tire of Japanese Laid-Open Patent Publication No. 2016-196237, the first inclined grooves and the second inclined grooves linearly extend, and thus, on a travel road that includes corners having various radiuses of curvature, the range within which the excellent edge effect is exhibited is limited to a corner having a specific radius of curvature, whereby this effect is limited.

The present invention has been conceived of in view of the above-described problem, and a main object of the present invention is to provide a tire that allows cornering grip and traction performance to be stably exhibited in traveling on rough terrain.

The present invention is a tire including a tread portion for which a rotation direction and a direction of mounting the tire to a vehicle are specified. The tread portion includes: an outer tread end and an inner tread end respectively located on a vehicle outer side and a vehicle inner side when the tire is mounted to the vehicle; a plurality of inclined grooves extending from the outer tread end to the inner tread end and inclined, relative to a tire axial direction, in the rotation direction from the outer tread end toward the inner tread end; and a plurality of separating grooves by which land portions demarcated by the plurality of inclined grooves are each separated into a plurality of blocks in the tire axial direction. Over an entire section from the outer tread end to the inner tread end, each of the plurality of inclined grooves has a shape of a smooth curve and is curved so as to project in the rotation direction such that, over the entire section from the outer tread end to the inner tread end, the inclined groove continuously extends without having any distinct inflection point. In each land portion, the plurality of blocks include a plurality of longitudinally elongated blocks each having a length, along the corresponding separating groove, that is larger than a length thereof along the corresponding inclined groove.

In the tire according to the present invention, over the entire section from the outer tread end to the inner tread end, each of the plurality of inclined grooves has a shape of a smooth curve and is curved so as to project in the rotation direction. Therefore, on a travel road that includes corners having various radiuses of curvature, the edges of the inclined grooves (or the blocks demarcated thereby) can be made orthogonal to the tire running direction.

In addition, in the tire according to the present invention, in each land portion, the blocks are formed such that the plurality of longitudinally elongated blocks each having a length, along the corresponding separating groove, that is larger than the length thereof along the corresponding inclined groove are arrayed along the inclined groove. Therefore, even when the edges are orthogonal to the tire running direction, deformations of the blocks having the edges are suppressed so that the edges can be brought into stable and firm contact with the road surface, whereby the frictional force can be increased.

As described above, the tire according to the present invention allows excellent edge effect to be exhibited on a travel road that includes corners having various radiuses of curvature, and furthermore, allows excellent cornering grip and traction performance to be stably exhibited in traveling on rough terrain.

In another aspect of the present invention, in each land portion, a center of gravity of a tread surface contour of a longitudinally elongated block that is located closest to the inner tread end among the plurality of longitudinally elongated blocks may be located closer to the inner tread end than a tire equator.

In another aspect of the present invention, in each land portion, the number of the plurality of longitudinally elongated blocks may be not less than four.

In another aspect of the present invention, the plurality of separating grooves may linearly extend.

In another aspect of the present invention, in each land portion, the plurality of longitudinally elongated blocks may be formed such that a tread surface of a longitudinally elongated block that is closer to the outer tread end has a smaller area.

In another aspect of the present invention, in each land portion, a laterally elongated block having a length, along the inclined groove, that is larger than a length thereof along the separating groove may be disposed on the inner tread end side relative to the longitudinally elongated block located closest to the inner tread end among the plurality of longitudinally elongated blocks.

In another aspect of the present invention, in each land portion, the laterally elongated block may be segmented and curved so as to project in the rotation direction.

In another aspect of the present invention, in each land portion, the laterally elongated block may include: a first laterally elongated block located on a leading side in the rotation direction; and a second laterally elongated block located on a trailing side relative to the first laterally elongated block and having a tread surface of which an area is smaller than that of the first laterally elongated block.

The present invention allows cornering grip and traction performance to be stably exhibited in traveling on rough terrain.

### BRIEF DESCRIPTION OF THE DRAWINGS

FIG. 1 is a development of a tread portion showing an embodiment of the present invention; and
FIG. 2 is a partially enlarged view that focuses on one land portion in FIG. 1.

### DESCRIPTION OF THE PREFERRED EMBODIMENTS

Hereinafter, an embodiment of the present invention will be described with reference to the drawings. The drawings are used for the purpose of illustration and explanation of the present invention, and the present invention is not to be construed as being limited to the specific embodiment shown in the drawings, or the like.

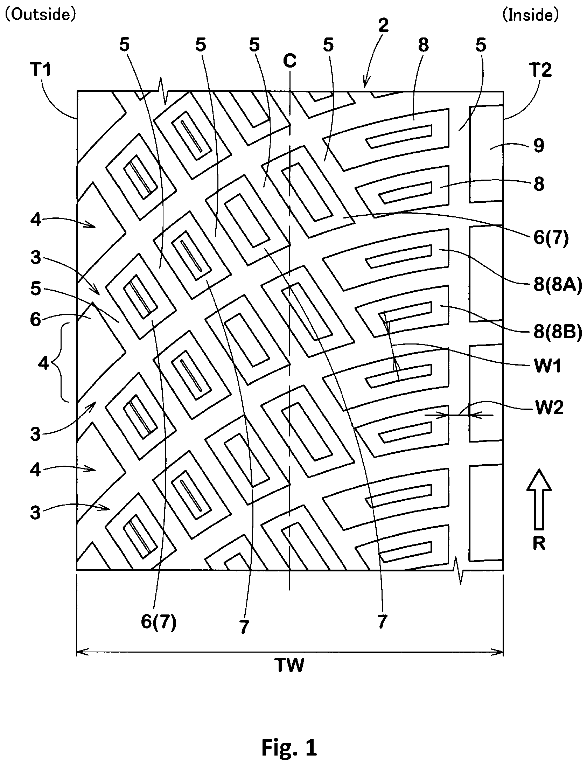

FIG. 1 shows a development of a tread portion 2 of a tire according to the present embodiment. The tire according to the present embodiment can be applied to tires of various categories, but is preferably embodied as a pneumatic tire, for traveling on rough terrain, that is suitable for a dirt trial and a rally. Although FIG. 1 does not show any internal structure or the like of the tire, the tire according to the present embodiment can be preferably configured to have a radial structure having high tread rigidity.

As shown in FIG. 1, the tire has the tread portion 2 for which a rotation direction R and a direction of mounting the tire to a vehicle are specified. Thus, an outer tread end T1 and an inner tread end T2 respectively located on a vehicle outer side and a vehicle inner side when the tire is mounted to the vehicle, are specified in the tread portion 2. The rotation direction R of the tire and the direction of mounting the tire to a vehicle can be indicated on a sidewall portion or the like of the tire with use of characters (e.g., "Inside" and "Outside" in FIG. 1), a symbol (e.g., arrow), or the like.

In the tread portion 2, the outer tread end T1 and the inner tread end T2 are respectively defined as the outermost positions, in the tire axial direction, on the tread ground-contact surface in a normal-load-applied state.

The "normal-load-applied state" refers to a state where the tire is mounted to a normal rim at a normal internal pressure, a normal load is applied to the tire, and the tire is brought into contact with a flat surface at a camber angle of 0 degrees.

In a normal state, the distance in the tire axial direction between the outer tread end T1 and the inner tread end T2 is defined as a tread width TW.

The "normal state" refers to a state where the tire is mounted to the normal rim at the normal internal pressure and no load is applied to the tire. Unless otherwise specified, the dimension and the like of each portion of the tire are values obtained through measurement performed in the "normal state".

The "normal rim" refers to a rim that is defined, in a standard system including a standard on which the tire is based, by the standard for each tire, and is, for example, the "Standard Rim" in the JATMA standard, the "Design Rim" in the TRA standard, or the "Measuring Rim" in the ETRTO standard.

The "normal internal pressure" refers to an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard. In a case where the tire is for passenger cars, the normal internal pressure is 180 kPa. In a case where the tire is a racing tire or the like to which no standard is applicable, a rim and an air pressure recommended by the manufacturer are used as the normal rim and the normal internal pressure.

The "normal load" refers to a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case where the tire is for passenger cars, the normal load is a load equivalent to 88% of the above-described load.

The tread portion 2 includes a plurality of inclined grooves 3 extending from the outer tread end T1 to the inner tread end T2. Each inclined groove 3 is inclined relative to the tire axial direction so as to be inclined in the rotation direction R from the outer tread end T1 toward the inner tread end T2.

In addition, over the entire section from the outer tread end T1 to the inner tread end T2, each inclined groove 3 extends to have a shape of a smooth curve and is curved to project in the rotation direction R. Therefore, over the entire section from the outer tread end T1 to the inner tread end T2, the inclined groove 3 continuously extends without having any distinct inflection point.

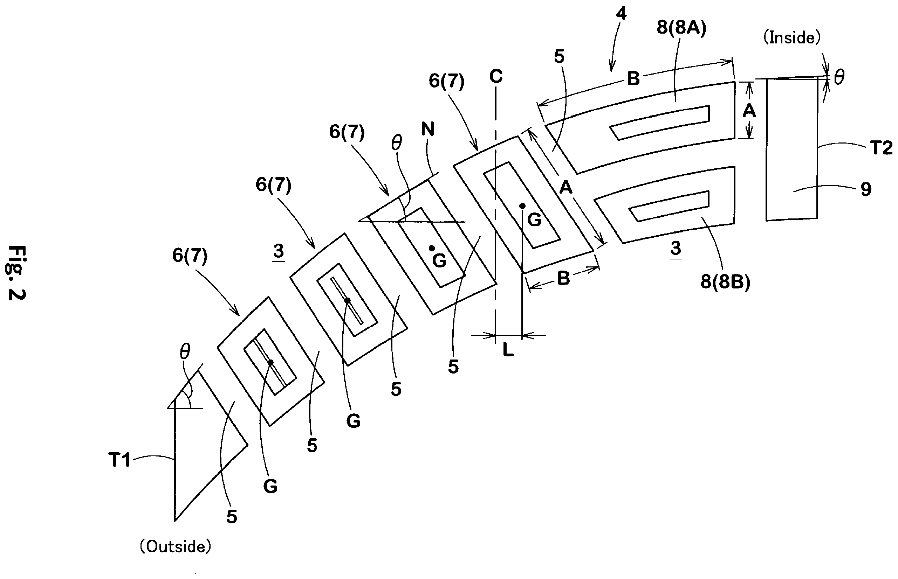

FIG. 2 is a partially enlarged view of FIG. 1. An angle θ, relative to the tire axial direction, of a tangent line N drawn on an edge of each inclined groove 3 (hereinafter, this angle is defined as the angle θ of the inclined groove 3) gradually decreases from the outer tread end T1 toward the inner tread end T2. Thus, in the tire according to the present embodiment, any of the edge portions of the inclined grooves 3 can be caused to intersect with the tire running direction at a large angle (in particular, caused to be orthogonal thereto) even when various slip angles are given to the tire. Therefore, the tire according to the present embodiment can exhibit an edge effect on a low-µ dirt road surface or the like that includes corners having various radiuses of curvature.

In particular, at the time of cornering of the vehicle, the ground-contact surface of the tread portion 2 shifts to the outer tread end T1 side owing to the effect of lateral force, and the amount of the shift is approximately proportional to the magnitude of the lateral force. On the other hand, in the tire according to the present embodiment, since each inclined groove 3 extends to have a shape of a smooth curve over the entire section from the outer tread end T1 to the inner tread end T2, the above-described effect is stably obtained on various corners. In order to further improve such an effect, the angle θ of the inclined groove 3 relative to the tire axial direction is set to the range of 40 to 60 degrees at the outer tread end T1, in a preferable mode.

On the other hand, the inner tread end T2 side tends to contact with the road surface at a high ground-contact pressure during straight running of the vehicle. Thus, in order to ensure stability during straight running at high speed, the angle θ of the inclined groove 3 on the inner tread end T2 side is desirably made smaller. From this standpoint, the angle θ of the inclined groove 3 is desirably within the range of 0 to 7 degrees at the inner tread end T2.

As shown in FIG. 1, although not being specifically limited, a width W1 (measured in a direction orthogonal to the tangent line) of the inclined groove 3 is preferably 3.5 to 7.5% of the tread width TW in order to more effectively exhibit the above-described effect.

The tread portion 2 is separated into a plurality of land portions 4 by the plurality of inclined grooves 3. That is, each land portion 4 is demarcated by a pair of the inclined grooves 3 adjacent to each other in the tire circumferential direction, and extends from the outer tread end T1 to the inner tread end T2.

Each land portion 4 has a plurality of separating grooves 5. Each of the plurality of separating grooves 5 extends to separate the land portion 4 into a plurality of blocks 6 in the tire axial direction. That is, each separating groove 5 connects the inclined grooves 3 to each other, the inclined grooves 3 being adjacent to each other in the tire circumferential direction. In the present embodiment, the number of the separating grooves 5 to be arranged in each land portion 4 is not less than four as a preferable mode, more preferably not less than five, and further preferably not less than six.

In the present embodiment, the plurality of separating grooves 5 linearly extend in order to prevent clogging from occurring owing to road-surface formation objects such as sand and dirt on a dirt road or the like. In a particularly preferable mode, each separating groove 5 is desirably disposed so as to be linearly contiguous to any of the separating grooves 5 of another land portion 4 that is adjacent in the tire circumferential direction. Accordingly, dirt-removing property of the separating groove 5 is further improved. Although not being specifically limited, a width W2 of each separating groove 5 is desirably set to, for example, the range of approximately 70 to 100% of the width W1 of the inclined groove 3.

In the present embodiment, except for the separating groove 5 disposed closest to the inner tread end T2, the separating grooves 5 are inclined in the rotation direction R of the tire from the inner tread end T2 side to the outer tread end T1 side. Therefore, each separating groove 5 is disposed so as to intersect with the inclined groove 3 to which the separating groove 5 is connected. In a preferable mode, the inclined separating grooves 5 extend so as to be parallel to each other, but the present invention is not limited to such a mode.

As clearly shown in FIG. 2, in each land portion 4, the blocks 6 include a plurality of longitudinally elongated blocks 7 which are arranged so as to be adjacent to each other along the inclined groove 3. Each longitudinally elongated block 7 is formed so as to have a length A, along the separating groove 5, that is larger than a length B thereof along the inclined groove 3. The lengths A and B refer to maximum lengths in the respective directions.

Each longitudinally elongated block 7 has high flexural rigidity or shearing rigidity in a direction orthogonal to the inclined groove 3. Thus, during cornering of the vehicle, deformation of the longitudinally elongated block 7 is suppressed even if an edge of the longitudinally elongated block 7 intersects with the tire running direction at a large angle. Therefore, during the cornering, the longitudinally elongated block 7 can generate large frictional force as a result of the edge being brought into stable and firm contact with the road surface.

Although not being specifically limited, the number of the longitudinally elongated blocks 7 to be provided to each land portion 4 is desirably not less than four in order to improve the above-described effect. In particular, in each land portion 4, all the blocks 6 which exclude the block located closest to the outer tread end T1 and in each of which the center of gravity G of a tread surface contour is located closer to the outer tread end T1 than a tire equator C, are desirably formed as the longitudinally elongated blocks 7 in order to further improve the above-described effect. This is because these blocks 6 are included within the main ground-contact surface during the cornering.

In addition, in order to further improve the above-described effect, in each longitudinally elongated block 7, a ratio A/B of the length A along the separating groove 5 to the length B along the inclined groove 3, is preferably not less than 1.1, and more preferably not less than 1.3. However, if the ratio A/B is excessively increased, the flexural rigidity, in the direction along the inclined groove 3, of the longitudinally elongated block 7 may decrease and the straight running stability and the like may be impaired. From this standpoint, the ratio A/B is preferably not greater than 2.1, and more preferably not greater than 1.9.

During cornering with a small slip angle, the ground-contact surface of the tread portion 2 is not greatly shifted to the outer tread end T1 side, but is still located near the center of the tread portion 2. In order to improve the performance during such cornering, in each land portion 4, the center of gravity G of the tread surface contour of the longitudinally elongated block 7 that is located closest to the inner tread end T2 among the longitudinally elongated blocks 7, is desirably located closer to the inner tread end T2 than the tire equator C. That is, by allowing high edge effect to be effectively exhibited by the longitudinally elongated block 7 at a position closer to the inner tread end T2 than the tire equator C, high cornering grip and traction can be obtained even at the initial stage of the cornering with a small slip angle.

In a preferable mode, the center of gravity G of the tread surface contour of the longitudinally elongated block 7 located closest to the inner tread end T2, is desirably located closer to the inner tread end T2 than the tire equator C by a distance L, in the tire axial direction, not less than 5 mm and more preferably not less than 10 mm.

In a preferable mode, in each land portion 4, the plurality of longitudinally elongated blocks 7 are desirably formed such that the tread surface of a longitudinally elongated block 7 that is closer to the outer tread end T1 has a smaller area. Accordingly, in each land portion 4, a longitudinally elongated block 7 that is closer to the outer tread end T1 has a smaller rigidity, whereby grip performance and wear resistance are improved in a balanced manner. In a preferable mode, the rate of increase in the area of the tread surface is desirably approximately 5 to 20% between the longitudinally elongated blocks adjacent to each other.

As shown in FIG. 1 and FIG. 2, in each land portion 4, at least one laterally elongated block 8 is disposed on the inner tread end T2 side relative to the longitudinally elongated block 7 that is located closest to the inner tread end T2.

The laterally elongated block 8 is formed such that the length B thereof along the inclined groove 3 is larger than the length A thereof along the separating groove 5. The laterally elongated block 8 is disposed on the inner tread end T2 side, on which the laterally elongated block 8 has an edge extending substantially along the tire axial direction. This configuration serves to improve the straight running stability of the tire.

In a preferable mode, in each land portion 4, the laterally elongated block 8 is formed as a segmented (arc-shaped) block that is curved so as to project in the rotation direction R. That is, the laterally elongated block 8 in the present embodiment has, on both sides in the tire circumferential direction, a pair of arc-shaped edges that are curved in the same direction. Such a laterally elongated block 8 exhibits edge effects in multiple directions while improving the straight running stability, thereby serving to improve traction on rough terrain.

In a preferable mode, in each land portion 4, the laterally elongated block 8 includes: a first laterally elongated block 8A located on the leading side in the rotation direction R; and a second laterally elongated block 8B located on the trailing side relative to the first laterally elongated block 8A and having a tread surface of which the area is smaller than that of the first laterally elongated block 8A. Since each land portion 4 includes two kinds of laterally elongated blocks 8 that are different from each other in rigidity as described above, an advantage is obtained in that excellent traction and braking performance can be exhibited on each of a soft road and a hard road, among dirt roads, that are different from each other in hardness.

At a portion further closer to the inner tread end T2 than the laterally elongated block 8, a longitudinally elongated rectangular block 9 may be disposed so as to have a length in the tire circumferential direction that is larger than the length thereof in the tire axial direction. The longitudinally elongated rectangular block 9 has high shearing rigidity in the tire circumferential direction, and is disposed closest to the inner tread end T2 in each land portion 4. Therefore, this longitudinally elongated block can improve traction and braking performance during straight running.

Although the embodiment of the present invention has been described as above, the present invention may be subjected to numerous alterations and modifications, and the above-mentioned embodiment has been described merely as an example. Therefore, it should be noted that the present invention is not limited to the specific embodiment described in the present specification, but alterations, equivalents, and modifications are all encompassed in the present invention unless deviating from the gist of the present invention as set forth in the claims.

### [Examples]

Tires (Example) with a size of 205/65R15 each having the basic pattern shown in FIG. 1, and tires (Comparison example) with the same size each having a pattern described in Japanese Laid-Open Patent Publication No. 2016-196237, were tested in terms of traction performance, cornering performance, and uneven-wear resistance performance. Both types of tires were identical to each other in terms of internal structure, rubber composition, and land ratio, and thus were tested in relation to the difference therebetween only in terms of pattern. The test method was as follows.

### <Traction performance and cornering performance>

The test tires were mounted to all the wheels of four-wheel drive passenger cars each having an engine displacement of 2000 cc under the following conditions. Test drivers drove the vehicles on a dry dirt test course including corners having various radiuses of curvature, and sensory evaluation of traction performance and cornering performance was made by the test drivers. The results are indicated as scores, with the results of the Conventional example being 100. The larger the numeric value is, the more favorable the result is.
Rim (all wheels): 15×7.0J
Internal pressure (all wheels): 200 kPa

### <Uneven-wear resistance performance>

The vehicles were driven for 10000 km on a test course with a dry asphalt road surface. Then, measurement was performed on an inclined groove of a rear wheel at four points equidistantly located along the inclined groove, and the difference in groove depth between the maximum value and the minimum value was obtained through measurement. As the result, the difference is indicated as an index, with the result of the Conventional example being 100. The larger the numeric value is, the more favorable the result is.

The results of the tests are indicated in table 1.

**[Table 1]**

| | Conventional example | Example |
|---|---|---|
| Traction performance (score) | 100 | 103 |
| Cornering performance (score) | 100 | 106 |
| Uneven-wear resistance performance (index) | 100 | 101 |

As a result of the tests, it has been confirmed that the performances of the tires of the Example are significantly improved relative to those of the Comparison example.

## Claims

1. A tire comprising
a tread portion (2) for which a rotation direction (R) and a direction of mounting the tire to a vehicle are specified, wherein
the tread portion (2) includes
an outer tread end (T1) and an inner tread end (T2) respectively located on a vehicle outer side and a vehicle inner side when the tire is mounted to the vehicle,
**characterized in that**
a plurality of inclined grooves (3) extending from the outer tread end (T1) to the inner tread end (T2) and inclined, relative to a tire axial direction, in the rotation direction (R) from the outer tread end (T1) toward the inner tread end (T2), and
a plurality of separating grooves (5) by which land portions (4) demarcated by the plurality of inclined grooves (3) are each separated into a plurality of blocks (6) in the tire axial direction,
over an entire section from the outer tread end (T1) to the inner tread end (T2), each of the plurality of inclined grooves (3) has a shape of a smooth curve and is curved so as to project in the rotation direction (R) such that, over the entire section from the outer tread end (T1) to the inner tread end (T2), the inclined groove (3) continuously extends without having any distinct inflection point, and
in each land portion (4), the plurality of blocks (6) include a plurality of longitudinally elongated blocks (7) each having a length (A), along the corresponding separating groove (5), that is larger than a length (B) thereof along the corresponding inclined groove (3).

2. The tire according to claim 1, wherein,
in each land portion (4), a center of gravity (G) of a tread surface contour of a longitudinally elongated block (7) that is located closest to the inner tread end (T2) among the plurality of longitudinally elongated blocks (7) is located closer to the inner tread end (T2) than a tire equator (C).

3. The tire according to claim 1 or 2, wherein,
in each land portion (4), the number of the plurality of longitudinally elongated blocks (7) is not less than four.

4. The tire according to any one of claims 1 to 3, wherein
the plurality of separating grooves (5) linearly extend.

5. The tire according to any one of claims 1 to 4, wherein,
in each land portion (4), the plurality of longitudinally elongated blocks (7) are formed such that a tread surface of a longitudinally elongated block (7) that is closer to the outer tread end (T1) has a smaller area.

6. The tire according to any one of claims 1 to 5, wherein,
in each land portion (4), a laterally elongated block (8) having a length (B), along the inclined groove (3), that is larger than a length (A) thereof along the separating groove (5) is disposed on the inner tread end (T2) side relative to the longitudinally elongated block (7) located closest to the inner tread end (T2) among the plurality of longitudinally elongated blocks (7).

7. The tire according to claim 6, wherein,
in each land portion (4), the laterally elongated block (8) is segmented and curved so as to project in the rotation direction (R).

8. The tire according to claim 6 or 7, wherein,
in each land portion (4), the laterally elongated block (8) includes: a first laterally elongated block (8A) located on a leading side in the rotation direction (R); and a second laterally elongated block (8B) located on a trailing side relative to the first laterally elongated block (8A) and having a tread surface of which an area is smaller than that of the first laterally elongated block (8A).

## Patentansprüche

1. Reifen, umfassend
einen Laufflächenabschnitt (2), für den eine Drehrichtung (R) und eine Montagerichtung des Reifens an einem Fahrzeug festgelegt sind,
wobei der Laufflächenabschnitt (2) umfasst
ein äußeres Laufflächenende (T1) und ein inneres Laufflächenende (T2), die sich jeweils auf einer Fahrzeugaußenseite und einer Fahrzeuginnenseite befinden, wenn der Reifen an dem Fahrzeug montiert ist,
**dadurch gekennzeichnet, dass**
eine Vielzahl von geneigten Rillen (3) sich von dem äußeren Laufflächenende (T1) zu dem inneren Laufflächenende (T2) erstrecken und relativ zu einer Reifenaxialrichtung in der Drehrichtung (R) von dem äußeren Laufflächenende (T1) zu dem inneren Laufflächenende (T2) hin geneigt sind, und
durch eine Vielzahl von Trennrillen (5) Landabschnitte (4), die durch die Vielzahl von geneigten Rillen (3) abgegrenzt sind, jeweils in der Reifenaxialrichtung in eine Vielzahl von Blöcken (6) getrennt sind,
über einen gesamten Abschnitt von dem äußeren Laufflächenende (T1) zu dem inneren Laufflächenende (T2) jede der Vielzahl von geneigten Rillen (3) die Form einer glatten Kurve aufweist und so gekrümmt ist, dass sie in der Drehrichtung (R) vorsteht, so dass über den gesamten Abschnitt von dem äußeren Laufflächenende (T1) zu dem inneren Laufflächenende (T2) sich die geneigte Rille (3) kontinuierlich erstreckt, ohne einen bestimmten Wendepunkt zu haben, und
in jedem Landabschnitt (4) die Vielzahl von Blöcken (6) eine Vielzahl von in Längsrichtung langgestreckten Blöcken (7) umfasst, die jeweils eine Länge (A) entlang der entsprechenden Trennrille (5) aufweisen, die größer ist als ihre Länge (B) entlang der entsprechenden geneigten Rille (3).

2. Reifen nach Anspruch 1, wobei in jedem Landabschnitt (4) ein Schwerpunkt (G) einer Laufflächenoberflächenkontur eines in Längsrichtung langgestreckten Blocks (7), der unter der Vielzahl von in Längsrichtung langgestreckten Blöcken (7) dem inneren Laufflächenende (T2) am nächsten liegt, näher am inneren Laufflächenende (T2) liegt als ein Reifenäquator (C).

3. Reifen nach Anspruch 1 oder 2, wobei in jedem Landabschnitt (4) die Anzahl der Vielzahl von in Längsrichtung langgestreckten Blöcken (7) nicht weniger als vier beträgt.

4. Reifen nach einem der Ansprüche 1 bis 3, wobei die Vielzahl der Trennrillen (5) linear verläuft.

5. Reifen nach einem der Ansprüche 1 bis 4, wobei in jedem Landabschnitt (4) die Vielzahl von in Längsrichtung langgestreckten Blöcken (7) so gebildet ist, dass eine Laufflächen-Oberfläche eines in Längsrichtung langgestreckten Blocks (7), die näher am äußeren Laufflächenende (T1) liegt, ein kleineres Flächenmaß aufweist.

6. Reifen nach einem der Ansprüche 1 bis 5, wobei in jedem Landabschnitt (4) ein seitlich langgestreckter Block (8) mit einer Länge (B) entlang der geneigten Rille (3), die größer als seine Länge (A) entlang der Trennrille (5) ist, auf der Seite des inneren Laufflächenendes (T2) relativ zu dem in Längsrichtung langgestreckten Block (7) angeordnet ist, der dem inneren Laufflächenende (T2) unter der Vielzahl von in Längsrichtung langgestreckten Blöcken (7) am nächsten liegt.

7. Reifen nach Anspruch 6, wobei in jedem Landabschnitt (4) der seitlich langgestreckte Block (8) so segmentiert und gekrümmt ist, dass er in der Drehrichtung (R) vorsteht.

8. Reifen nach Anspruch 6 oder 7, wobei in jedem Landabschnitt (4) der seitlich verlängerte Block (8) umfasst: einen ersten seitlich verlängerten Block (8A), der sich auf einer in Drehrichtung (R) Vorlaufseite befindet; und einen zweiten seitlich verlängerten Block (8B), der sich auf einer Nachlaufseite relativ zu dem ersten seitlich verlängerten Block (8A) befindet und eine Laufflächen-Oberfläche aufweist, deren Flächenmaß kleiner ist als die des ersten seitlich verlängerten Blocks (8A).

## Revendications

1. Pneumatique comprenant
une portion formant bande de roulement (2) pour laquelle une direction de rotation (R) et une direction de montage du pneumatique sur un véhicule sont spécifiées, dans lequel
la portion formant bande de roulement (2) inclut
une extrémité de roulement extérieure (T1) et une extrémité de roulement intérieure (T2) situées respectivement sur un côté extérieur d'un véhicule et sur un côté intérieur d'un véhicule quand le pneumatique est monté sur le véhicule,
**caractérisé en ce que**
il est prévu
une pluralité de rainures inclinées (3) s'étendant depuis l'extrémité de roulement extérieure (T1) jusqu'à l'extrémité de roulement intérieure (T2) et inclinées, par rapport à la direction axiale du pneumatique, dans la direction de rotation (R) depuis l'extrémité de roulement extérieure (T1) vers l'extrémité de roulement intérieure (T2), et
une pluralité de rainures de séparation (5) au moyen desquelles des portions de relief (4) démarquées par la pluralité de rainures inclinées (3) sont séparées chacune en une pluralité de blocs (6) dans la direction axiale du pneumatique,
sur une section entière allant de l'extrémité de roulement extérieure (P1) jusqu'à l'extrémité de roulement intérieure (T2), chacune de la pluralité de rainures inclinées (3) a une forme de courbe en douceur et est incurvée de manière à se projeter dans la direction de rotation (R) de telle façon que, sur la section entière depuis l'extrémité de roulement extérieure (T1) jusqu'à l'extrémité de roulement intérieure (T2), la rainure inclinée (3) s'étend en continu sans présenter un quelconque point d'inflexion distinct, et
dans chaque portion en relief (4), la pluralité de blocs (6) incluent une pluralité de blocs allongés longitudinalement (7), chacun ayant une longueur (A), le long de la rainure de séparation correspondante (5) qui est plus grande qu'une longueur (B) de celle-ci le long de la rainure inclinée correspondante (3).

2. Pneumatique selon la revendication 1, dans lequel
dans chaque portion en relief (4), un centre de gravité (G) d'un contour de surface de roulement d'un bloc allongé longitudinalement (7) qui est situé au plus proche de l'extrémité de roulement intérieure (T2) parmi la pluralité de blocs allongés longitudinalement (7) est situé plus proche de l'extrémité de roulement intérieure (T2) qu'un équateur de pneumatique (C).

3. Pneumatique selon la revendication 1 ou 2, dans lequel
dans chaque portion en relief (4), le nombre de la pluralité de blocs allongés longitudinalement (7) n'est pas inférieur à quatre.

4. Pneumatique selon l'une quelconque des revendications 1 à 3, dans lequel
la pluralité de rainures de séparation (5) s'étendent linéairement.

5. Pneumatique selon l'une quelconque des revendications 1 à 4, dans lequel
dans chaque portion en relief (4), la pluralité de blocs allongés longitudinalement (7) sont formés de telle façon qu'une surface de roulement d'un bloc allongé longitudinalement (7) qui est plus rapproché de l'extrémité de roulement extérieure (T1) a une superficie plus petite.

6. Pneumatique selon l'une quelconque des revendications 1 à 5, dans lequel
dans chaque portion en relief (4), un bloc allongé latéralement (8) ayant une longueur (B), le long de la rainure inclinée (3), qui est plus grande qu'une longueur (A) de celle-ci le long de la rainure de séparation (5) est disposé sur le côté de l'extrémité de roulement intérieure (T2) par rapport au bloc allongé longitudinalement (7) situé au plus proche de l'extrémité de roulement intérieure (T2) parmi la pluralité de blocs allongés longitudinalement (7).

7. Pneumatique selon la revendication 6, dans lequel
dans chaque portion en relief (4), le bloc allongé latéralement (8) est segmenté et incurvé de manière à se projeter dans la direction de rotation (R).

8. Pneumatique selon la revendication 6 ou 7, dans lequel
dans chaque portion en relief (4), le bloc allongé latéralement (8) inclut : un premier bloc allongé latéralement (8A) situé sur un côté d'attaque dans la direction de rotation (R), et un second bloc allongé latéralement (8B) situé sur un côté de fuite par rapport au premier bloc allongé latéralement (8A) et ayant une surface de roulement dont une superficie est plus petite que celle du premier bloc allongé latéralement (8A).
